# EUROPÄISCHE PATENTANMELDUNG

(11) **EP 2 251 567 A1**
(43) Veröffentlichungstag der Anmeldung: **17.11.2010**
(21) Anmeldenummer: 10004242.3
(22) Anmeldetag: 21.04.2010
(51) Int. Cl.: F16H 57/04, F16H 25/24

(54) **Schmiermittelzuführung für eine Linearbewegungsvorrichtung**

(30) Priorität: 16.05.2009 DE 102009021658
(71) Anmelder: Robert Bosch GmbH, 70469 Stuttgart (DE)
(72) Erfinder: Scholz, Michael, 97711 Poppenlauer (DE)
(74) Vertreter: Maiß, Harald

(57) **Zusammenfassung**

Die Erfindung betrifft eine Linearbewegungsvorrichtung (10) mit einem Gehäuse (20), das einen Innenraum (21) mit einer Innenoberfläche aufweist, und einem gegenüber dem Gehäuse (20) in Richtung einer Längsache (11) beweglichen Läufer (50), der in dem Innenraum (21) angeordnet ist.

Erfindungsgemäß ist in dem Innenraum (21) des Gehäuses (20) ein flexibler Schlauch (70) vorgesehen, dessen Enden (71; 72) am Gehäuse (20) und am Läufer (50) so befestigt sind, dass eine Schmiermittelübertragungsverbindung zwischen den genannten Teilen besteht, wobei der flexible Schlauch (70) wenigstens eine Biegung (73) aufweist, so dass er eine Längsbewegung des Läufers (50) ausgleichen kann, und wobei der flexible Schlauch (70) wenigstens abschnittsweise derart benachbart zur Innenoberfläche des Gehäuses (20) angeordnet ist, dass sein Bewegungsweg durch die Innenoberfläche begrenzt ist.

## Beschreibung

Die Erfindung betrifft eine Linearbewegungsvorrichtung gemäß dem Oberbegriff von Anspruch 1.

Aus der DE 10 2007 043 391 A1 ist eine Linearbewegungsvorrichtung bekannt. Diese umfasst ein Gehäuse mit einem Innenraum, in dem eine Kugelgewindegewindespindel bezüglich einer Längsachse drehbar aufgenommen ist. Weiter ist ein Läufer in Form einer Kugelumlaufmutter vorgesehen, die mit der Kugelgewindespindel in Schraubeingriff steht. Der Läufer ist mit einem Schubrohr fest verbunden, das aus dem Gehäuse herausragt. Durch Verdrehen der Kugelgewindespindel, beispielsweise mit einem Elektromotor, wird der Läufer mit der Schubstange relativ zum Gehäuse ein- und ausgefahren. Man bezeichnet derartige Linearbewegungsvorrichtungen auch als Elektrozylinder.

Bei dieser Linearbewegungsvorrichtung besteht das Problem, dass die Kugelumlaufmutter mit Schmiermittel versorgt werden muss, da die Erstbefüllung der Kugelumlaufmutter mit Schmierfett oft nicht für die gesamte Lebensdauer des Kugelgewindetriebs ausreichend ist.

Aus dem Stand der Technik ist es bekannt, die Schmiermittelversorgung von beweglichen Baugruppen mit einem flexiblen Schlauch zu bewerkstelligen, wobei der flexible Schlauch eine Schmiermittelübertragungsverbindung zwischen einer beweglichen Baugruppe und einer unbeweglichen Baugruppe herstellt. Die unbewegliche Baugruppe ist hierbei meist mit einer zentralen Schmiermittelversorgungseinrichtung ausgestattet, an der der flexible Schlauch angeschlossen ist. Der flexible Schlauch ist hierbei meist U-förmig gebogen, so dass er die Bewegungen der beweglichen Baugruppe durch elastische Verformung ausgleichen kann. Als konkretes Beispiel seien Werkzeugmaschinen genannt, bei denen die verschiedenen Schlitten über flexible Schläuche mit Schmiermittel, insbesondere Schmieröl, versorgt werden. Die flexiblen Schläuche sind hierbei meist in so genannten Energieführungsketten aufgenommen, wie sie beispielsweise aus der DE 41 40 909 C1 bekannt sind. Auf diese Weise werden die flexiblen Schläuche während ihrer Ausgleichsbewegung auf einer definierten Bahn geführt.

Bei der aus der DE 10 2007 043 391 A1 bekannten Linearführung ist es jedoch nicht möglich, den flexiblen Schlauch mittels einer Energiekette zu führen, da in dem Gehäuse hierfür nicht genügend Platz zur Verfügung steht.

Es ist Aufgabe der Erfindung, eine gattungsgemäße Linearbewegungsvorrichtung mit einem Schmiermittelübertragungssystem zur Übertragung von Schmiermittel vom Gehäuse auf den Läufer auszustatten, welches so platzsparend ist, dass es innerhalb des Gehäuses aufgenommen werden kann.

Gemäß dem selbständigen Anspruch wird diese Aufgabe dadurch gelöst, dass in dem Innenraum des Gehäuses ein flexibler Schlauch vorgesehen ist, dessen Enden am Gehäuse und am Läufer so befestigt sind, dass eine Schmiermittelübertragungsverbindung zwischen den genannten Teilen besteht, wobei der flexible Schlauch wenigstens eine Biegung aufweist, so dass er eine Längsbewegung des Läufers ausgleichen kann, und wobei der flexible Schlauch wenigstens abschnittsweise derart benachbart zur Innenoberfläche des Gehäuses angeordnet ist, dass sein Bewegungsweg durch die Innenoberfläche begrenzt ist. Durch diese Ausgestaltung kann auf gesonderte Führungselemente für den flexiblen Schlauch verzichtet werden, da dieser durch die Innenoberfläche des Gehäuses geführt wird. Hierbei ist es nicht notwendig, dass der flexible Schlauch permanent an der Innenoberfläche gleitet, da der flexible Schlauch eine gewisse Eigensteifigkeit aufweist, die ihn in der gewünschten Lage hält. Wichtig ist, dass das Gehäuse unerwünschte elastische Verformungen des flexiblen Schlauches begrenzt, so dass sichergestellt ist, dass der flexible Schlauch innerhalb vorgegebener Toleranzgrenzen eine definierte Form aufweist. Die genannten unerwünschten Verformungen können beispielsweise durch Gewichts- oder Trägheitskräfte verursacht werden, die auf den flexiblen Schlauch einwirken. Die genannten Toleranzgrenzen der definierten Form des flexiblen Schlauches ergeben sich aus der Forderung, dass die Ausgleichsbewegung des flexiblen Schlauches in allen Betriebszuständen der Linearbewegungsvorrichtung störungsfrei möglich sein muss. Bei einer bevorzugten Ausführungsform ist der Schlauch im Ruhezustand der Linearbewegungsvorrichtung wenigstens abschnittsweise mit geringem Abstand zur Innenoberfläche des Gehäuses angeordnet.

In den abhängigen Ansprüchen sind vorteilhafte Weiterbildungen und Verbesserungen der Erfindung angegeben.

An der Innenoberfläche des Gehäuses kann eine sich in Richtung der Längsachse erstreckende Führungsnut vorgesehen sein, wobei der flexible Schlauch U-förmig gebogen ist, so dass er zwei U-Schenkel aufweist, wobei ein U- Schenkel in der Führungsnut aufgenommen ist. Der flexible Schlauch wird demnach von der Führungsnut auf einer definierten Bahn geführt. Die Führungsnut verläuft hierbei bevorzugt geradlinig und parallel zur Längsachse, so dass der U-förmige Schlauch in jeder Stellung des Läufers im Wesentlichen parallel zur Gewindespindel ausgerichtet ist.

Der Nachteil der vorstehend beschriebenen Ausführungsform besteht darin, dass der Hubweg des Läufers nicht beliebig lang ausgeführt werden kann. Dies ist darauf zurückzuführen, dass der U-Schenkel des Schlauches, der nicht in der Führungsnut geführt ist, frei im Innenraum des Gehäuses angeordnet ist. Die Steifigkeit dieses Abschnitts muss demnach so groß sein, dass er keine unerwünschten Bewegungen ausführt. Der Schlauch muss aber gleichzeitig flexibel sein, damit er in eine veränderliche U-Form gebogen werden kann, um die Ausgleichsbewegung ausführen zu können. Folglich kann der Hubweg nicht beliebig lang sein.

Zur Überwindung dieses Problems wird vorgeschlagen, dass der flexible Schlauch schraubenförmig gebogen bezüglich der Längsachse im Innenraum des Gehäuses angeordnet ist, wobei die Innenoberfläche des Gehäuses den Schlauch so umgibt, dass seine Beweglichkeit in radialer Richtung bezüglich der Längsachse begrenzt ist. Damit kann der flexible Schlauch entlang des gesamten Hubwegs in radialer Richtung am Gehäuse geführt werden und zwar unabhängig davon, wie groß der Hubweg des Läufers ist. In Richtung der Längsachse ist keine Führung des Schlauches erforderlich, da dies die Richtung der Ausgleichsbewegung ist. Der schraubenförmig gebogene Schlauch hat überdies den Vorteil, dass die elastische Verformung desselben auch bei sehr langen Hubwegen klein ist. Demnach kann der Schlauch sehr viele Hübe ausführen, ehe er durch Ermüdungserscheinungen zerstört wird.

Die Innenoberfläche des Gehäuses kann mehrere beabstandete, sich in Richtung der Längsachse erstreckende Führungsflächen aufweisen, die zur Anlage mit dem flexiblen Schlauch bestimmt sind, wobei der flexible Schlauch die Innenoberfläche des Gehäuses zwischen den Führungsflächen nicht berührt. Die Kontaktfläche zwischen dem flexiblen Schlauch und dem Gehäuse ist folglich sehr klein. Dies hat zur Folge, dass auch die Reibkräfte zwischen dem flexiblen Schlauch und dem Gehäuse klein sind, so dass die Ausgleichsbewegung des flexiblen Schlauches durch die genannten Reibkräfte nicht behindert wird.

In dem Innenraum des Gehäuses kann eine drehbare Gewindespindel vorgesehen sein, die in Schraubeingriff mit dem Läufer steht, wobei die Drehachse der Gewindespindel parallel zur Längsachse verläuft und wobei der schraubenförmig gebogene Schlauch die Gewindespindel umgibt. Um die Gewindespindel herum ist ohnehin ein Freiraum vorhanden, der für die Bewegung des Läufers erforderlich ist. In diesem Freiraum kann der flexible Schlauch problemlos aufgenommen werden, ohne dass das Gehäuse zu diesem Zweck vergrößert werden muss. Demnach ist die vorgeschlagene Linearbewegungsvorrichtung besonders platzsparend.

Das Gehäuse kann einen sich in Richtung der Längsachse erstreckenden Hauptkörper umfassen, der eine im Wesentlichen konstante Querschnittsform aufweist, wobei der flexible Schlauch unmittelbar am Hauptkörper geführt ist. Bei dem Hauptkörper handelt es sich vorzugsweise um ein Bauteil, das aus Aluminium stranggepresst ist, also um einen besonders kostengünstigen Profilkörper, der trotzdem mit einer komplizierten Innenform ausgeführt werden kann. Demnach ist es möglich, den Hauptkörper mit der für die Führung des flexiblen Schlauches erforderlichen Querschnittskontur herzustellen, ohne dass dadurch zusätzliche Herstellkosten anfallen. Die vorgeschlagene Linearbewegungsvorrichtung ist deshalb besonders kostengünstig.

An wenigstens einem Ende des Hautkörpers kann eine gesonderte Endplatte vorgesehen sein, wobei ein Ende des flexiblen Schlauches an der Endplatte befestigt ist. Die Endplatte wird in erster Linie benötigt, um die Hauptkörper stirnseitig zu verschließen, damit der Innenraum im Wesentlichen dicht abgeschlossen ist. Da die gesonderte Endplatte problemlos vom Gehäuse entfernt werden kann, ist ihre Innenseite besonders leicht zugänglich, um das Ende des flexiblen Schlauches daran zu befestigen. Die vorgeschlagene Linearbewegungsvorrichtung lässt sich folglich einfach herstellen.

Die Erfindung wird im Folgenden anhand der beigefügten Zeichnungen näher erläutert. Es stellt dar:
- Fig. 1: eine perspektivische Ansicht einer erfindungsgemäßen Linearbewegungsvorrichtung im eingefahrenen Zustand;
- Fig. 2: die Linearbewegungsvorrichtung gemäß Fig. 1 im ausgefahrenen Zustand;
- Fig. 3: einen Querschnitt der Linearbewegungsvorrichtung gemäß Fig. 1; und
- Fig. 4: eine grobschematische Darstellung einer zweiten Ausführungsform einer erfindungsgemäßen Linearbewegungsvorrichtung.

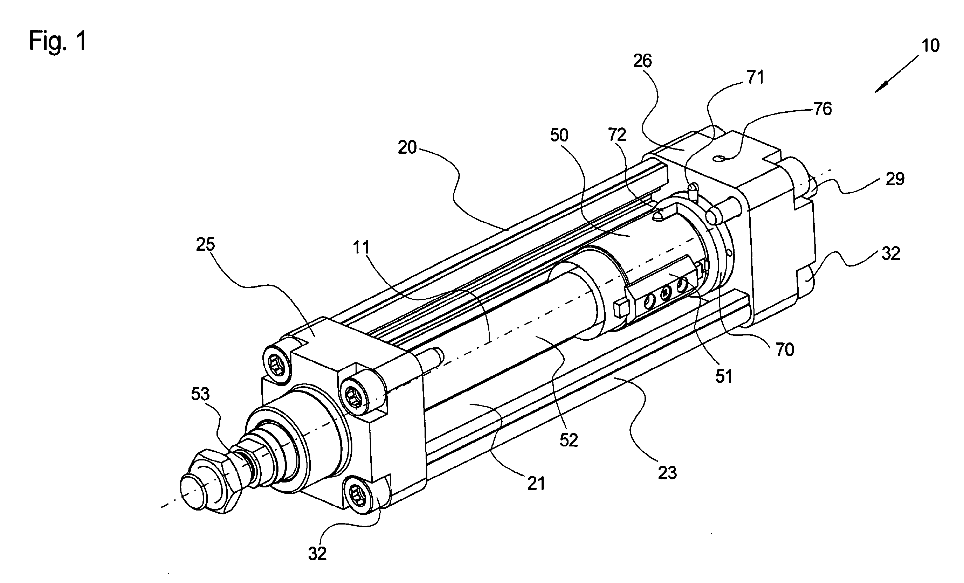

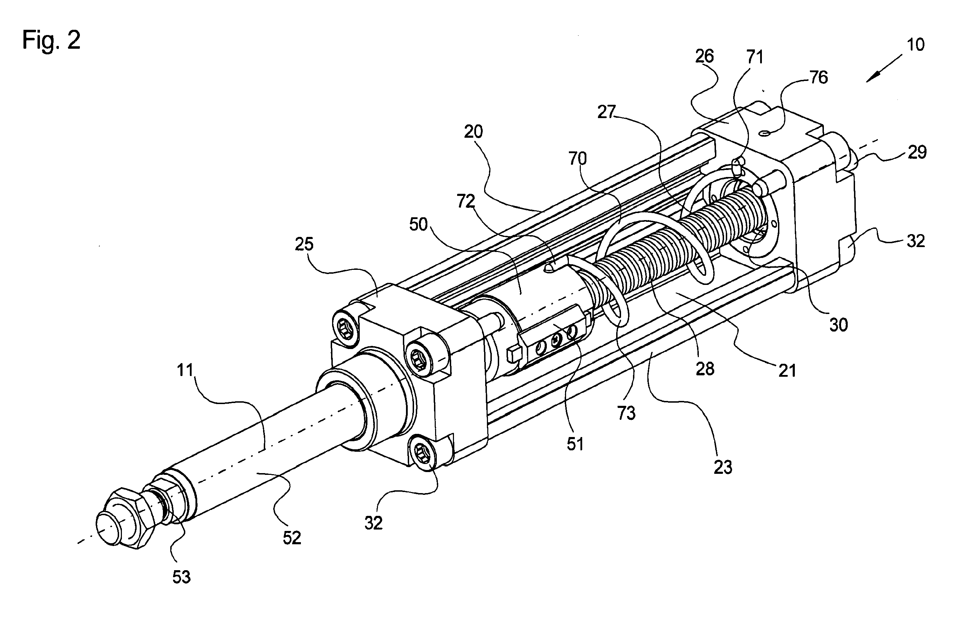

Fig. 1 zeigt eine erfindungsgemäße Linearbewegungsvorrichtung 10 im eingefahrenen Zustand, wobei Fig. 2 die gleiche Linearbewegungsvorrichtung 10 im ausgefahrenen Zustand zeigt. Der besseren Übersicht halber ist in den Figuren 1 und 2 der Hauptkörper 23 des Gehäuses 20 aufgeschnitten.

Die Linearbewegungsvorrichtung 10 umfasst ein Gehäuse 20 bestehend aus einem Hauptkörper 23, einer vorderen Endplatte 25 und einer hinteren Endplatte 26. Der Hauptkörper 23 ist im Wesentlichen rohrartig ausgeführt und im Strangpressverfahren aus Aluminium hergestellt. Er definiert daher zusammen mit den beiden Endplatten 25; 26 einen abgeschlossenen Innenraum 21 des Gehäuses 20. Die beiden Endplatten 25; 26 sind jeweils mit vier Schraubbolzen 32 am Hauptkörper 23 befestigt.

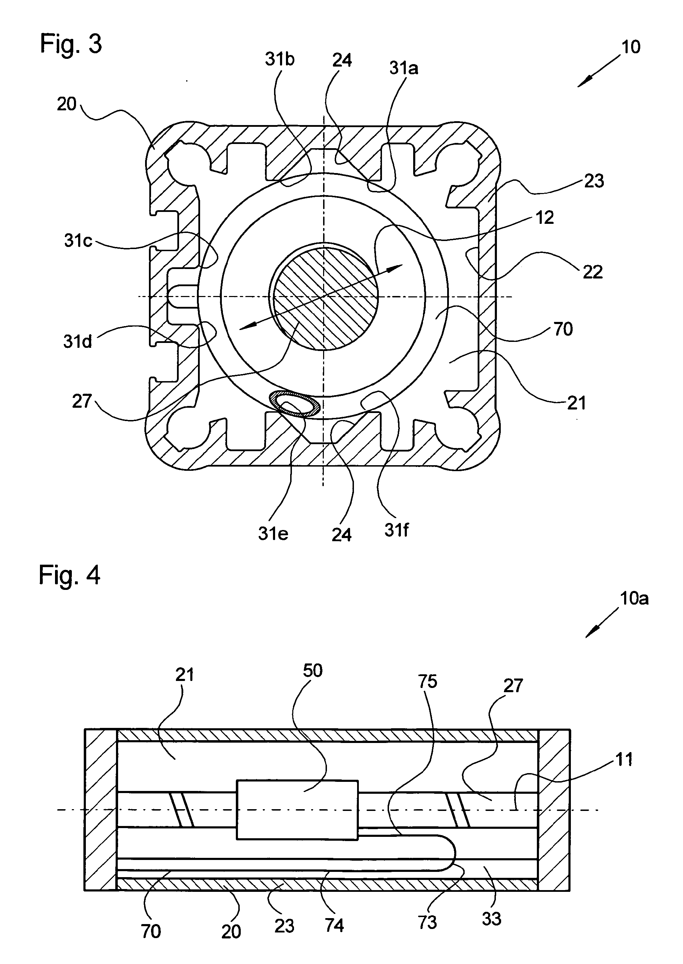

In der hinteren Endplatte 26 ist ein Drehlager 30 in Form eines Radialkugellagers angeordnet, in dem eine Kugelgewindespindel 27 drehbar gelagert ist, wobei deren Drehachse mit der Längsachse 11 der Linearbewegungsvorrichtung 10 übereinstimmt. Die Kugelgewindespindel 27 ist einstückig mit einem Antriebszapfen 29 versehen, so dass sie durch einen (nicht dargestellten) Elektromotor in Drehung versetzt werden kann. Weiter ist ein Läufer 50 in Form einer Kugelumlaufmutter vorgesehen, die mit der Kugelgewindespindel 27 in Schraubeingriff steht. Am Läufer 50 ist eine Verdrehsicherung 51 in Form zweier gegenüberliegender Gleitleisten vorgesehen, die in eine angepasste Nut (Fig. 3; Nr. 24) im Hauptkörper 23 eingreifen. Die Kugelumlaufmutter 50 kann sich somit nicht mit der Kugelgewindespindel 27 mitdrehen, sie wird vielmehr durch eine Drehung der Kugelgewindespindel 27 in Richtung der Längsachse 11 verschoben.

Die vordere Endplatte 25 wird von einem Schubrohr 52 durchsetzt, welches das freie Ende der Kugelgewindespindel 27 umgibt. Das Schubrohr 52 ist mit der Kugelgewindemutter 50 fest verbunden, so dass es mit dieser ein- und ausgefahren wird. Am vorderen Ende des Schubrohres 52 ist ein Befestigungsgewinde 53 vorgesehen, an dem eine (nicht dargestellte) übergeordnete Baugruppe befestigt werden kann, um diese mittels der Linearbewegungsvorrichtung 10 in Bewegung zu versetzen.

Zwischen der hinteren Endplatte 26 und dem Läufer 50 ist der erfindungsgemäße flexible Schlauch 70 vorgesehen. Das erste Ende 71 des flexiblen Schlauches 70 ist mit einem Schmiermittelzuführanschluss 76 an der hinteren Endplatte 26 verbunden, über den Schmiermittel, insbesondere Schmierfett oder Schmieröl, in den flexiblen Schlauch 70 eingeführt werden kann. Der Schmiermittelzuführanschluss 76 kann beispielsweise mit einer zentralen Schmiermittelversorgungsanlage verbunden sein. Das zweite Ende 72 des flexiblen Schlauches 70 ist mit dem Läufer 50 in Form der Kugelumlaufmutter derart verbunden, dass das Schmiermittel zu den schraubenförmigen Laufbahnen 28 auf der Kugelgewindespindel 27 und der Kugelumlaufmutter 50 gefördert wird, so dass dort ein ausreichender Schmierfilm vorhanden ist. Die Wälzkörper des Kugelgewindetriebs 27; 50 können somit verschleißarm abwälzen.

Der flexible Schlauch 70 ist schraubenförmig gebogen um die Kugelgewindespindel 27 und damit um die Längsachse 11 der Linearbewegungsvorrichtung 10 herum angeordnet. Die Biegung 73 des flexiblen Schlauches 70 entspricht der Biegung der entsprechenden Schraubenlinie. Die Beweglichkeit des flexiblen Schlauches 70 in radialer Richtung (Fig. 3; Nr. 12) bezüglich der Längsachse 11 wird durch den Hauptkörper 23 begrenzt, so dass der flexible Schlauch 70 immer die vorgesehene Schraubenlinienform aufweist, mit der die Längsbewegung des Läufers 50 ausgeglichen werden kann. Wie ein Vergleich von Fig. 1 mit Fig. 2 ergibt, sind nur wenige (hier zwei) Schraubwindungen des flexiblen Schlauches 70 erforderlich, um den Hub der Linearbewegungsvorrichtung 10 auszugleichen.

Abgesehen von dem flexiblen Schlauch 70 ist die Linearbewegungsvorrichtung 10 identisch mit der Linearbewegungsvorrichtung gemäß der DE 10 2007 043 391 A1 ausgeführt. Der Inhalt der DE 10 2007 043 391 A1 wird hiermit in vollem Umfang in Bezug genommen und zum Inhalt der vorliegenden Anmeldung gemacht.

Fig. 3 zeigt einen Querschnitt der ausgefahrenen Linearbewegungsvorrichtung 10 im Bereich des flexiblen Schlauches 70. Die dargestellte Querschnittsform des Hauptkörpers 23 ist über dessen gesamte Länge im Wesentlichen konstant. An der Innenoberfläche 22 des Gehäuseinnenraums 21 sind insgesamt sechs Führungsflächen 31a - 31f vorgesehen, an denen der flexible Schlauch 70 geführt wird. Die Führungsflächen 31a - 31f besitzen jeweils eine sehr geringe Breite, so dass die Berührfläche zum flexiblen Schlauch 70 gering ist. Der Abstand des flexiblen Schlauches 70 zu den Führungsflächen 31a - 31f in radialer Richtung 12 ist sehr klein gewählt, so dass sich der flexible Schlauch 70 immer in einer definierten Lage befindet. Hierbei ist darauf hinzuweisen, dass der genannte radiale Abstand abhängig von der Stellung des Läufers ist, wobei der radiale Abstand umso größer ist, je weiter der flexible Schlauch 70 auseinander gezogen ist. Der radiale Abstand ist aber in jedem Fall so klein, dass ausgeschlossen ist, dass der flexible Schlauch die Kugelgewindespindel 27 berührt. Zwischen den Führungsflächen 31a - 31f wird der flexible Schlauch 70 nicht in der Innenoberfläche 22 des Gehäuses 20 geführt.

Fig. 4 zeigt eine zweite Ausführungsform einer erfindungsgemäßen Linearbewegungsvorrichtung 10a. Diese Linearbewegungsvorrichtung 10a umfasst ein Gehäuse 20, in dem ein Läufer 50 in Richtung einer Längsachse 11 beweglich aufgenommen ist. Zwischen dem Gehäuse 20 und dem Läufer 50 ist ein flexibler Schlauch 70 vorgesehen, so dass eine Schmiermittelübertragungsverbindung zwischen den genannten Teilen besteht. Der flexible Schlauch 70 ist insgesamt U-förmig gebogen, so dass er einen ersten 74 und einen zweiten U-Schenkel 75 aufweist. Der erste U-Schenkel 74 ist in einer Führungsnut 33 des Hauptkörpers 23 des Gehäuses 20 geführt, während der zweite U-Schenkel 75 frei im Innenraum 21 des Gehäuses 20 angeordnet ist. Durch eine Längsbewegung des Läufers 50 verändert sich die Länge des zweiten U-Schenkels 75, wobei sich die Biegung 73 des flexiblen Schlauches 70 entlang der Führungsnut 33 bewegt. Die Steifigkeit des flexiblen Schlauches 70 ist hierbei so gewählt, dass sich der zweite U-Schenkel 75 auch bei maximaler Länge aufgrund seines Eigengewichts nicht übermäßig verformt.

### Bezugszeichenliste

- 10: Linearbewegungsvorrichtung
- 10a: Linearbewegungsvorrichtung (zweite Ausführungsform)
- 11: Längsachse
- 12: radiale Richtung

- 20: Gehäuse
- 21: Innenraum
- 22: Innenoberfläche
- 23: Hauptkörper
- 24: Nut für Verdrehsicherung
- 25: vordere Endplatte
- 26: hintere Endplatte
- 27: Gewindespindel
- 28: Laufbahn
- 29: Antriebszapfen
- 30: Drehlager
- 31 a - f: Führungsfläche
- 32: Schraubbolzen
- 33: Führungsnut

- 50: Läufer
- 51: Verdrehsicherung
- 52: Schubrohr
- 53: Befestigungsgewinde
- 70: flexibler Schlauch
- 71: erstes Ende
- 72: zweites Ende
- 73: Biegung
- 74: erster U-Schenkel
- 75: zweiter U-Schenkel
- 76: Schmiermittelzuführanschluss

## Patentansprüche

1. Linearbewegungsvorrichtung (10; 10a) mit einem Gehäuse (20), das einen Innenraum (21) mit einer Innenoberfläche (22) aufweist, und einem gegenüber dem Gehäuse (20) in Richtung einer Längsache (11) beweglichen Läufer (50), der in dem Innenraum (21) angeordnet ist,
**dadurch gekennzeichnet, dass** in dem Innenraum (21) des Gehäuses (20) ein flexibler Schlauch (70) vorgesehen ist, dessen Enden (71; 72) am Gehäuse (20) und am Läufer (50) so befestigt sind, dass eine Schmiermittelübertragungsverbindung zwischen den genannten Teilen besteht, wobei der flexible Schlauch (70) wenigstens eine Biegung (73) aufweist, so dass er eine Längsbewegung des Läufers (50) ausgleichen kann, und wobei der flexible Schlauch (70) wenigstens abschnittsweise derart benachbart zur Innenoberfläche (22) des Gehäuses (20) angeordnet ist, dass sein Bewegungsweg durch die Innenoberfläche (22) begrenzt ist.

2. Linearbewegungsvorrichtung (10a) nach Anspruch 1,
**dadurch gekennzeichnet, dass** an der Innenoberfläche (22) des Gehäuses (20) eine sich in Richtung der Längsachse (11) erstreckende Führungsnut (33) vorgesehen ist, wobei der flexible Schlauch (70) U-förmig gebogen ist, so dass er zwei U-Schenkel (74; 75) aufweist, wobei ein U-Schenkel (74) in der Führungsnut (33) aufgenommen ist.

3. Linearbewegungsvorrichtung (10) nach Anspruch 1,
**dadurch gekennzeichnet, dass** der flexible Schlauch (70) schraubenförmig gebogen bezüglich der Längsachse (11) im Innenraum (21) des Gehäuses (20) angeordnet ist, wobei die Innenoberfläche (22) des Gehäuses (20) den Schlauch (70) so umgibt, dass seine Beweglichkeit in radialer Richtung (12) bezüglich der Längsachse (11) begrenzt ist.

4. Linearbewegungsvorrichtung nach Anspruch 3,
**dadurch gekennzeichnet, dass** die Innenoberfläche (22) des Gehäuses (20) mehrere beabstandete, sich in Richtung der Längsachse (11) erstreckende Führungsflächen (31a - 31f) aufweist, die zur Anlage mit dem flexiblen Schlauch (70) bestimmt sind, wobei der flexible Schlauch (70) die Innenoberfläche (22) des Gehäuses (20) zwischen den Führungsflächen (31a - 31f) nicht berührt.

5. Linearbewegungsvorrichtung nach Anspruch 3 oder 4,
**dadurch gekennzeichnet, dass** in dem Innenraum (21) des Gehäuses (20) eine drehbare Gewindespindel (27) vorgesehen ist, die in Schraubeingriff mit dem Läufer (50) steht, wobei die Drehachse der Gewindespindel (27) parallel zur Längsachse (11) verläuft und wobei der schraubenförmig gebogene Schlauch (70) die Gewindespindel (27) umgibt.

6. Linearbewegungsvorrichtung nach einem der vorstehenden Ansprüche,
**dadurch gekennzeichnet, dass** das Gehäuse (20) einen sich in Richtung der Längsachse (11) erstreckenden Hauptkörper (23) umfasst, der eine im Wesentlichen konstante Querschnittsform aufweist, wobei der flexible Schlauch (70) unmittelbar am Hauptkörper (23) geführt ist.

7. Linearbewegungsvorrichtung nach Anspruch 6,
**dadurch gekennzeichnet, dass** an wenigstens einem Ende des Hautkörpers (23) eine gesonderte Endplatte (26) vorgesehen ist, wobei ein Ende (71) des flexiblen Schlauches (70) an der Endplatte (26) befestigt ist.
